# EUROPEAN PATENT APPLICATION

(11) **EP 4 300 373 A1**
(43) Date of publication of application: **03.01.2024**
(21) Application number: 22305956.9
(22) Date of filing: 30.06.2022
(51) Int. Cl.: G06N 3/08, G06N 3/04, H04N 19/124, H04N 19/91

(54) **METHOD AND DEVICE FOR TRAINING A NEURAL NETWORK BASED DECODER**

(71) Applicant: Fondation B Com, 35510 Cesson Sevigne (FR); Orange, 75015 Paris (FR)
(72) Inventor: HENRY, FELIX, 35760 SAINT-GREGOIRE (FR); CLARE, GORDON, 35740 PACE (FR)
(74) Representative: Cabinet Beau de Loménie

(57) **Abstract**

The present invention concerns a device and a method for training a neural network based decoder. The method comprises during said training, quantizing, using a training quantizer, parameters representative of the coefficients of said neural network based decoder. The invention concerns also a method and device for encoding at least parameters representative of the coefficients of a neural network based decoder. The invention concerns also a method for generating an encoded bitstream comprising an encoded neural network based decoder, of a neural network based encoder and decoder, and a signal encoded using said neural network based encoder.

## Description

### Field of the disclosure

The present invention concerns the field of signal coding and decoding using neural networks.

### Description of the Related Art

Digital technologies are taking an increased importance in the daily life and especially video streaming. Its usage is growing so its environmental impact becomes a topic of importance. Standardization organisms such as MPEG and ITU contribute to the efforts of reducing video streaming impact and have released several video coding standards, reducing the size of videos while maintaining an acceptable visual quality. Neural-based (NN) encoders and decoders have been introduced in the video encoding and decoding process and provide improved performances, enabling a reduction of the volume of streamed data but their use in video codecs remain still challenging in terms of configuration. Several proposed solutions introducing neural network in video compression still lack of compression efficiency. For instance, the paper by Théo Ladune and Pierrick Philippe entitled "AIVC: Artificial Intelligence based video codec" discloses an end-to-end neural video codec presented as enabling to implement any desired coding configurations. However, this neural network codec presents some drawbacks and among them one can consider that the compression efficiency could be improved. To this end, the present disclosure proposes a neural network codec solving at least one drawback of the prior art.

### Summary of the disclosure

In this context, the present disclosure proposes a method for training a neural network based decoder, comprising during said training, quantizing, using a training quantizer, parameters representative of the coefficients of said neural network based decoder.

The present disclosure is particularly relevant in the context of a codec trained for a dedicated set of input signals, said dedicated set comprising the signals to encode. The decoder network learns to decode correctly even in the presence of quantization noise and can then be compressed much more to obtain an overall gain in compression efficiency, so when transmitted together with the encoded set of signals, the gain obtained using this specific set of signals for training the encoder is not cancelled.

According to some implementations, said parameters are the coefficients of said neural network based decoder.

Using the coefficients of the neural network represents an easy implementation which does not require additional parameters.

According to some implementations, said parameters are differences between the coefficients of said neural network based decoder and the coefficients of a reference neural network based decoder.

Using a differential training with the coefficients of a reference neural network enables less data to be transmitted for encoding the NN based decoder and therefore additional bandwidth is saved during storage or transmission of the trained NN based decoder.

According to some implementations, the method comprises
- running inferences of the training of the neural network based decoder using said quantized parameters,
- backpropagating gradients based on a result of said inferences to update coefficients of said neural network based decoder, updated coefficients of the neural network trained decoder being un-quantized.

Thanks to this, the gradients are not erased during the subsequent quantization stage.

According to some implementations, the method comprises:
- obtaining a difference between a reference neural network based decoder and said neural network based decoder to be trained,
- obtaining a dequantized version of said difference, said dequantized version being obtained further to applying said quantization,
- obtaining a trained decoder as a difference between said reference neural network based decoder and said dequantized version,
- said running inferences comprising the encoder to be trained and said obtained trained neural network based decoder.

According to another aspect, the proposed disclosure concerns a method for encoding, into a bitstream, at least parameters representative of the coefficients of a neural network based decoder wherein said neural network based decoder is trained using the training method of any implementations of the present disclosure.

According to some implementations, the method for encoding comprises quantization of said parameters representative of the coefficients of said trained neural network based decoder using a quantizer said quantizer being
- equal to said training quantier or
   - - a quantizer which reconstruction levels comprise the reconstruction levels of the training quantizer Q2.

According to some implementations, the method for encoding comprises quantization of said parameters representative of the coefficients of said trained neural network based decoder using a quantizer, said training quantizer being function of distortion and said quantizer being function of rate-distortion.

According to some implementations, the method for encoding comprises quantization of said parameters representative of the coefficients of said trained neural network based decoder using a quantizer, said training quantizer minimizing the distortion and said quantizer minimizing the rate-distortion.

According to some implementations of the method for encoding, said encoding is compliant with
- Neural Network Representation (NNR) also called MPEG-7 part 17 or
- Neural Network Exchange Format (NNEF) or
- Open Neural Network Exchange (ONNX).

According to another aspect, the present disclosure concerns a method for generating an encoded bitstream comprising
- an encoded neural network based decoder, of a neural network based encoder and decoder, encoded according to a method according to the present disclosure and
- a signal encoded using said neural network based encoder.

According to some implementations of the method for generating a bitstream, said bitstream is generated by concatenating said encoded neural network based decoder and said encoded signal.

According to another aspect, the present disclosure concerns an apparatus for training a neural network based decoder, comprising one or several processors configured alone or in combination to, during said training, quantize, using a training quantizer, parameters representative of the coefficients of said neural network based decoder.

According to some implementations of the apparatus for training a neural network based decoder, said parameters are the coefficients of said neural network based decoder.

According to some implementations of the apparatus for training a neural network based decoder, said parameters are differences between the coefficients of said neural network based decoder and the coefficients of a reference neural network based decoder.

According to some implementations of the apparatus for training a neural network based decoder, it is further configured for
- running inferences of the training of the neural network based decoder using said quantized parameters,
- backpropagating gradients based on a result of said inferences to update coefficients of said neural network based decoder, updated coefficients of the trained neural network based decoder being un-quantized.

According to some implementations of the apparatus for training a neural network based decoder, it is further configured for:
- obtaining a difference between a reference neural network based decoder and said neural network based decoder to be trained,
- obtaining a dequantized version of said difference, said dequantized version being obtained further to applying said quantization,
- obtaining a trained neural network based decoder as a difference between said reference neural network based decoder and said dequantized version,
- said running inferences comprising the encoder to be trained and said obtained trained neural network based decoder.

According to another aspect, the present disclosure concerns an apparatus for encoding into a bitstream at least parameters representative of the coefficients of a neural network based decoder wherein said neural network based decoder is trained using the training apparatus of any implementations of the present disclosure.

According to another aspect, the present disclosure concerns an apparatus for generating an encoded bitstream comprising
- an encoded neural network based decoder, of a neural network based encoder and decoder, encoded with an apparatus according to any implementations of the present disclosure and
- a signal encoded using said neural network based encoder.

According to another aspect the present disclosure concerns also a computer program product comprising instructions which, when the program is executed by one or more processors, causes the one or more processors to perform the methods of any of the implementations of the present disclosure.

According to another aspect the present disclosure concerns also a computer readable storage medium having stored thereon instructions for causing one or more processors to perform any of the implementations of the methods of the present disclosure.

### Brief Description of the Drawings

Figure 1 illustrates a general overview of a neural network based encoder and decoder.
Figures 2A and 2B illustrate two different implementations of an encoder for implementing two different implementations of the training method according to the present disclosure.
Figure 3 illustrates an example of the hardware architecture of an encoder according to some implementations of the present disclosure.
Figure 4 illustrates a first example of a training method of a NN based decoder according to some implementations of the present disclosure.
Figure 5 illustrates a second example of a training method of a NN based decoder according to some implementations of the present disclosure.
Figure 6 illustrates a third example of a training method of a NN based decoder according to some implementations of the present disclosure.
Figures 7A and 7B illustrate two different implementations of a decoder for decoding a signal encoded according to some implementations of the present disclosure.
Figure 8 illustrates an example of the hardware architecture of a decoder according to some implementations of the present disclosure.

### Detailed Description of Example Embodiments

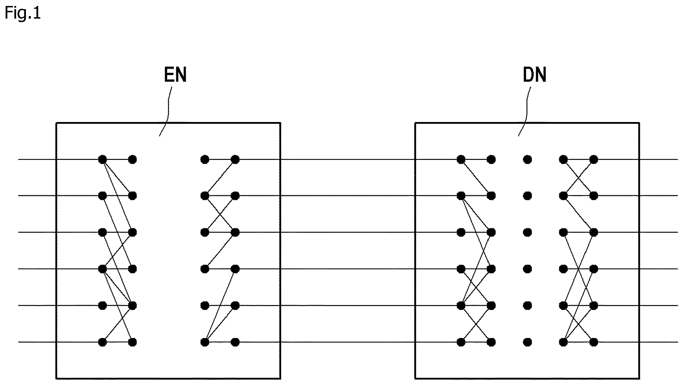

Figure 1 illustrates an overview of a neural network (NN) used for encoding and decoding a signal. By signal, one can understand any signal that would be coded (or compressed) for transmission in order to reduce the size of the data to be transmitted. Therefore, by signal one can understand a video signal but also an audio signal, a combination of both or other signals for which compression would we useful to gain transmission bandwidth or storage capacities, for instance.

The following description will refer to the encoding and decoding of images but this is given as an illustrative input signal and should not be limited to it.

As illustrated in figure 1, a neural network used for coding, EN, is associated to a neural network for decoding, DN, which can be used to decode the data units produced by the encoding neural network EN. The neural network EN and the neural network DN thus form a pair of neural networks.

The neural network EN and the neural network DN are each defined by a structure, comprising for example a plurality of layers of neurons and/or by a set of weights associated respectively with the neurons of the network concerned. Later in the descriptions weights or coefficients may be used indifferently when referring to neural networks structure or parameters.

A representation (for example two-dimensional) of the current image IMG (or, alternatively, of a component or a block of the current image IMG) is applied as input (i.e. on a layer of the input (i.e. on an input layer) of the artificial neural network of coding neural network EN. The artificial neural network of coding EN then produces at the output of the data, in this case a data unit.

Subsequently, the data (here the data unit) are applied as input to the decoding neural network DN. The decoding neural network DN then produces as output a representation IMG' (for example two-dimensional) which corresponds to the current image IMG (or, alternatively, to the component or block of the current image IMG).

The coding neural network EN is designed such that the data unit contains an amount of data that is smaller (at least on average) than the aforementioned representation of the current image IMG. In other words, the data in the data unit is compressed.

The encoding neural network EN and the decoding neural network DN are furthermore trained beforehand so as to minimize the differences between the input representation of the current image IMG and its output representation IMG', while also minimizing also the amount of data that transit between the neural network EN and the neural network DN.

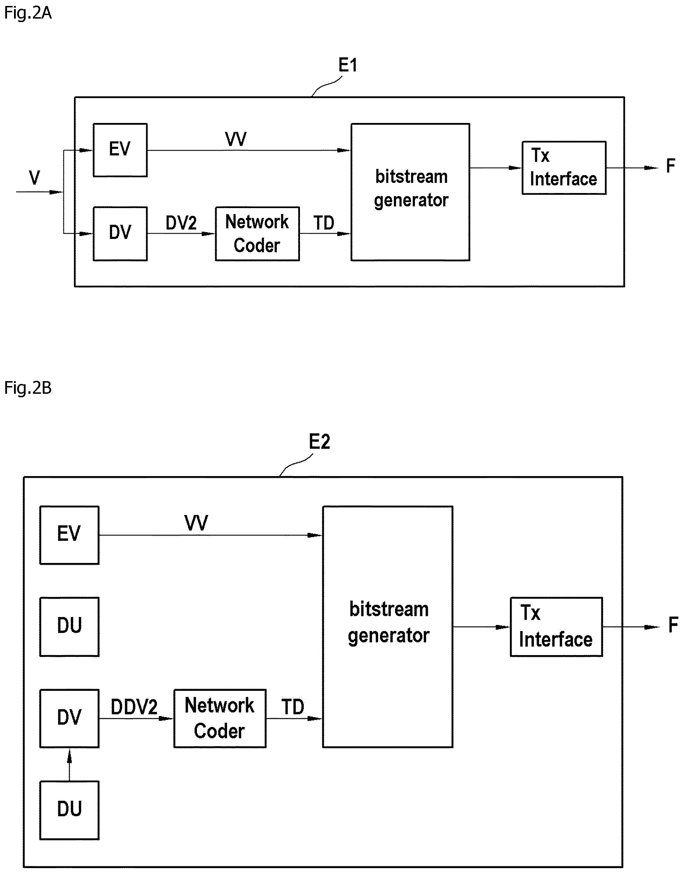

Figures 2A and 2B illustrate two different implementations of a NN codec for implementing two different implementations of the training method according to the present disclosure. These figures are schematic view and do not show all the modules of such encoders but only the modules of interest for the understanding of the present description.

Both in figure 2A and 2B, an input video V to be encoded is received at the input of the NN codec. Each image of the sequence V is represented, for example, by means of at least one two-dimensional representation, such as a matrix of pixels. In practice, each input image can be represented by a plurality of two-dimensional representations (or pixel arrays) representations (or pixel matrices) corresponding respectively to a plurality of components of the image (for example a plurality of color components, or, alternatively a luminance component and at least one chrominance component).

The present disclosure may be particularly relevant when a neural network for encoding a video signal is trained on the sequence to encode V. This improves subsequently the encoding as the signal is compressed much more efficiently. However, this creates the need for transmitting the decoder DV, together with the encoded signal, because the decoder is no more universal but also dedicated to the sequence and therefore not known, in terms of structure and/or parameters, at the decoding side. Transmitting the decoder DV may cancel the efforts obtained by the efficient training. In addition, when compressing the decoder for transmission, it is not desired to compress it too much, otherwise the decoding performances would drop. So, the bitrate of the decoder remains high and ruins all the gain obtained on the compressed signal.

Therefore the present disclosure provides a training method and apparatus for a neural network decoder by applying quantization during training of said decoder. Thanks to applying quantization during the training of the decoder, the decoder learns to decode correctly even in the presence of quantization noise. It can then be compressed much more to obtain an overall gain in compression efficiency.

In some implementations, the input video V may contain for example a set of images determined as homogeneous if the mean square error between the respective luminance components of two successive images is less than a predetermined threshold for all pairs of successive images of the sequence. (As an example, this threshold can be between 25 and 75, for example equal to 50, for images whose luminance values can vary between 0 and 255).

In some implementations, the input video V may be split into sets of images corresponding to a predefined duration, for instance a set of images over 1 second of video.

In some implementations, the input video V may be split into sets of images between two scene cuts.

The video V may also be split into mini batches so that computation costs are reduced. The number of images per mini batch can be controlled by parameters.

Fig 2A illustrates a first implementation E1 of an encoder comprising a NN based encoder EV and a NN based decoder DV. The NN based encoder EV and decoder DV are trained on the video V and the coefficients of the networks are therefore obtained for this specific input video V.

The training process includes, for example:
- applying a current image IMG (or a plurality of images including the current image IMG, here the images of the current sequence V) as input to the encoder E1 ;
- training the NN codec by running inferences over the input video V to obtain the coefficients (or weights) of the NN codec to reduce the throughput cost, said cost being known as the rate-distortion cost.

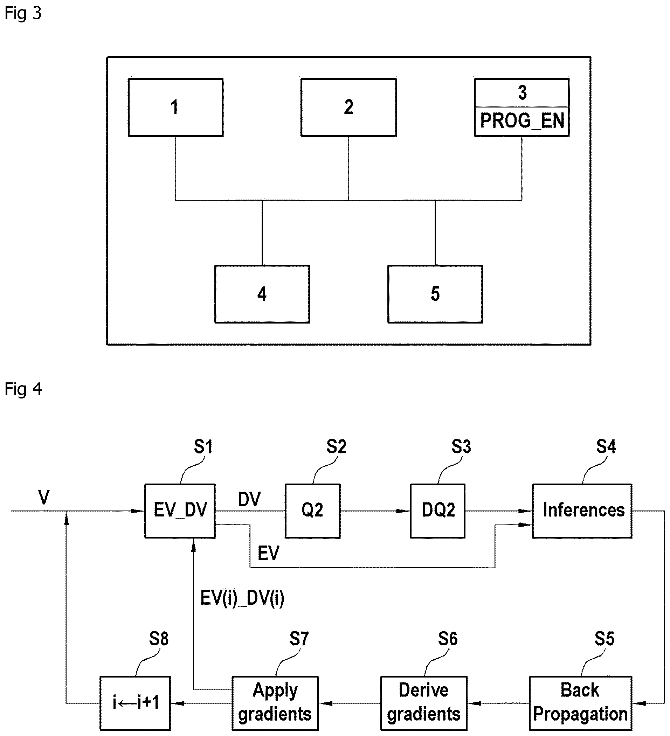

According to the implementation of figure 2A, the NN based decoder DV is trained using quantization during training. To this end, the inferences of the training are run on the NN codec and a training quantizer Q2 is applied during the training of the NN based decoder DV. The parameters of the NN based decoder are obtained by applying the quantizer Q2 to the coefficients of the NN based decoder DV. This is described more in details with regards to figure 4.

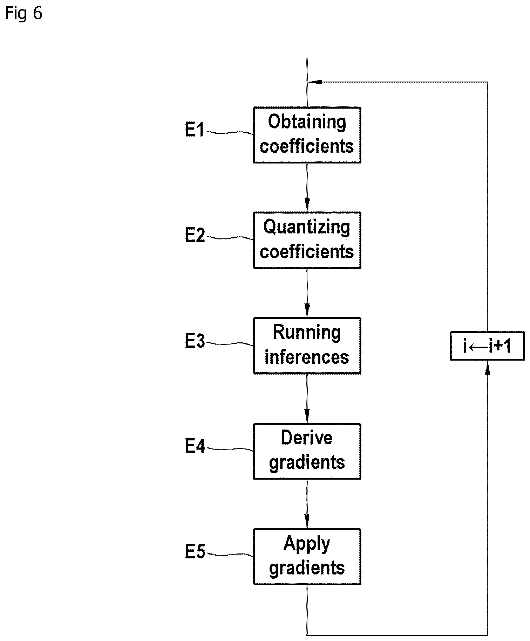

The encoder E1 comprises at least:
- a NN based encoder EV which is trained specifically on the input signal V to generate signal VV,
- a NN based decoder DV which is trained specifically on the input signal V and which training method is disclosed with regards to figures 4 or 6.
- a network coder in charge at least of coding the parameters representative of the trained based decoder DV, generating signal TD
- a bitstream generator in charge of concatenating at least the encoded signal VV and the encoded parameters representative of the trained based decoder DV, signal TD to output signal F.

The video V is encoded with the NN encoder EV according to known methods to obtain an encoded signal VV. According to neural network encoding, EV produces latent variables L that are representative of the input signal V. The L variables may then be quantized into quantization indices I, and the indices may be entropy-coded to form a bitstream B that is representative of the input video. The bitstream can be stored or transmitted.

As explained later, the parameters of the trained decoder may be the coefficients DV2(N) of the NN based decoder DV obtained according to the method described on figures 4 or6.

The parameters of the trained decoder are compressed using a network coder to obtain an NN encoded decoder TD. According to some implementations, the network coder may be chosen among:
- Neural Network Representation (NNR) or also called MPEG-7 part 17 or
- Neural Network Exchange Format (NNEF) or
- Open Neural Network Exchange (ONNX).

Of course, the above list is given as example only and should not be considered as being an exhaustive list of formats that may be used.

The network coder among other functions, comprises a quantization of the coefficients DV2 of the trained NN based decoder DV using a quantizer Q1. The quantizer Q1 may be:
- equal to the training quantizer Q2 or
- a quantizer which reconstruction levels comprise the reconstruction levels of the training quantizer Q2.

In some implementations, the training quantizer Q2 may be function of the distorsion and the quantizer Q1 may be function of the rate-distorsion.

In some implementations, the training quantization may minimize the distorsion and the quantizer Q1 may minimize the rate-distorsion.

In some implementations, the reconstruction levels of quantizer Q2 may be the reconstruction levels of Q1 having an even index.

So, the encoder E1 implements a method for encoding into a bitstream, at least the parameters representative of the coefficients of the NN based decoder DV wherein the decoder is trained using the training method described with reference to figure 4 or 6.

Then, a bitstream generator generates a bitstream comprising
- an encoded neural network decoder, of a neural network based encoder and decoder, encoded according to a method according to the present disclosure and
- a signal encoded using said neural network encoder.

The TD signal may be concatenated with the encoded signal VV by the bit stream generator to create the bitstream. By concatenation, one can understand any form of assembling both signals into a single bitstream and for instance multiplexing. The bitstream provided may be understandable by the decoder in charge of decoding the encoded signal W.

In practice, the bit stream generator may include an entropy encoder for entropy encoding of the aggregated data.

However, for the sake of simplification, we will not describe here the entropy coding step but the datastream F may have been entropy coded.

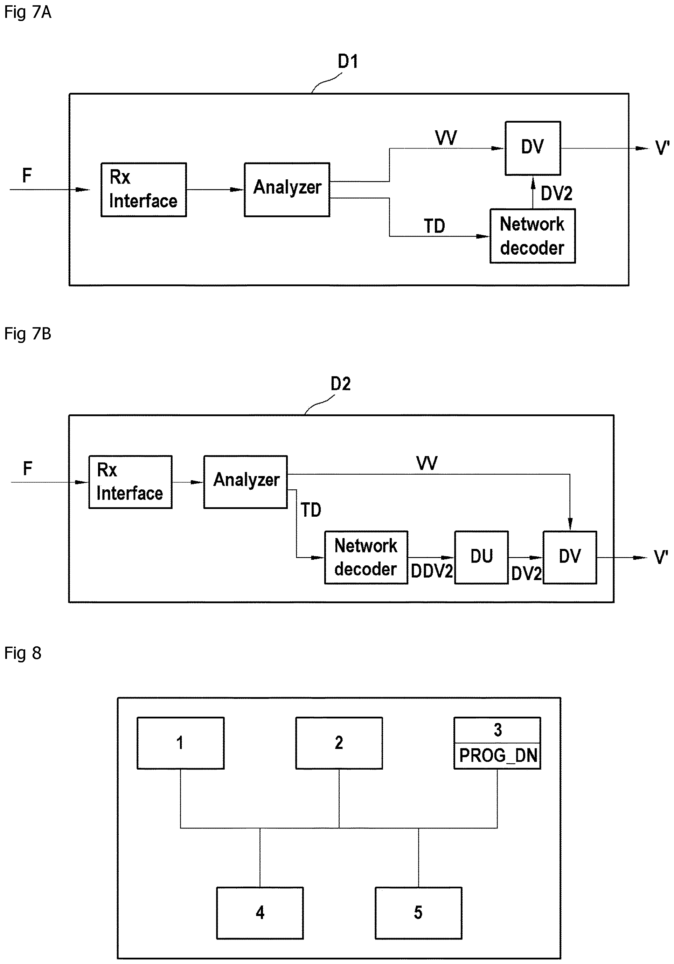

The bitstream F can then be transmitted to another electronic device through the TX interface such as for example, a decoding device as illustrated by figure 7A or stored in a storage unit (such as a hard disk or a memory of the encoding device E1 for subsequent reading and transmitting.

Fig 2B illustrates a second implementation E2 of an encoder comprising a NN based encoder EV and a NN based decoder DV. The NN based encoder EV and decoder DV are trained on the video V and the coefficients of the networks are therefore obtained for this specific input video V.

In addition, in this implementation encoder E2 comprises a reference NN based encoder EU and a reference NN based decoder DU. The reference NN based encoder EU and the reference NN based decoder DU which may be defined respectively as universal NN based encoder and decoder in the sense that they have been trained on a set of video sequences which is different than the videos it is used to compress. Their coefficients are known and shared with a decoder D2 (described in reference to figure 7B) in charge of decoding the received compressed video data and therefore do not need to be transmitted together with the encoded data.

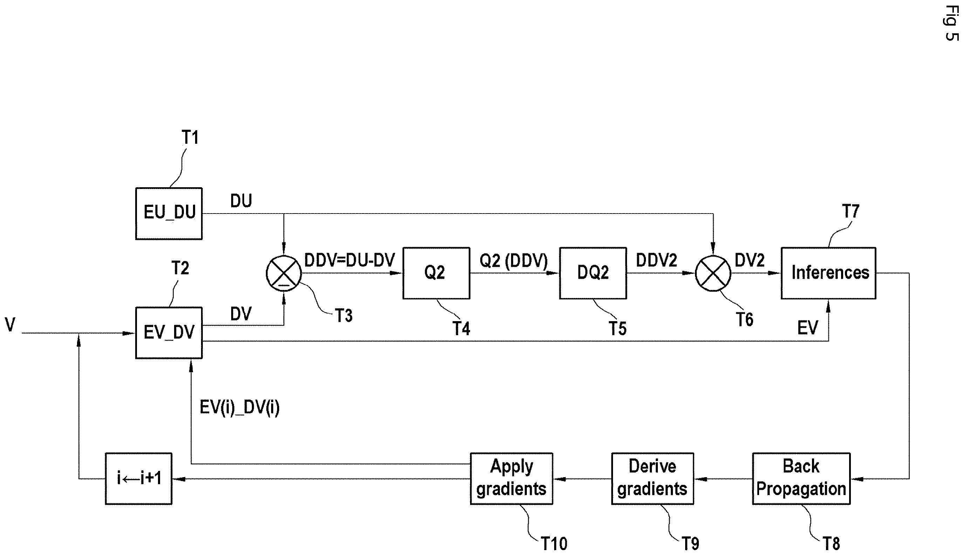

According to the implementation of figure 2B the NN based decoder DV is trained using quantization during training. To this end, the inferences of the training are run on the NN codec and a training quantizer Q2 is applied during the training of the NN based decoder DV. The parameters of the NN based decoder DV are obtained by applying the quantizer Q2 to parameters related to a difference between the coefficients of the NN based decoder DV and the reference NN based decoder DU. This is described more in details with regards to figures 5 and 6.The encoder E2 comprises at least:
- a NN based encoder EV which is trained specifically on the input signal V to generate signal W,
- a NN based decoder DV which is trained specifically on the input signal V and which training method is disclosed with regards to figures 5 and 6,
- a reference NN based encoder EU which is trained on several input sequences to generate signal VV,
- a reference NN based decoder DU which is trained several input sequences,
- a network coder in charge at least of coding the parameters representative of the trained based decoder DV, generating signal TD,
- a bitstream generator in charge of concatenating at least the encoded signal VV and the encoded parameters representative of the trained based decoder DV, signal TD to output signal F.

The bitstream V is encoded with the NN encoder EV according to known methods to obtain an encoded signal VV. According to neural network encoding, EV produces latent variables L that are representative of the input signal V. The L variables may then be quantized into quantization indices I, and the indices may be entropy-coded to form a bitstream B that is representative of the input video. The bitstream may be stored or transmitted.

As explained later, the parameters of the trained decoder may be the coefficients DDV2(N), representing the difference between DU and DV2(N) obtained according to the method described on figures 5 and 6. This represents the advantage of transmitting less data for encoding the decoder DV

The parameters of the trained decoder are compressed using a network coder to obtain an NN encoded decoder TD. According to some implementations, the network coder may be chosen among:
- Neural Network Representation (NNR) also called MPEG-7 part 17 or
- Neural Network Exchange Format (NNEF) or
- Open Neural Network Exchange (ONNX).

Of course, the above list is given as example only and should not be considered as being an exhaustive list of formats that may be used.

The network coder among other functions, comprises a quantization of the coefficients DDV2 of the trained NN based decoder DV using a quantizer Q1. The quantizer Q1 may be:
- equal to the training quantizer Q2 or
   - - a quantizer which reconstruction levels comprise the reconstruction levels of the training quantizer Q2.

In some implementations, the training quantizer Q2 may be function of the distorsion and the quantizer Q1 may be function of the rate-distorsion.

In some implementations, the training quantization may minimize the distorsion and the quantizer Q1 may minimize the rate-distorsion.

In some implementations, the reconstruction levels of quantizer Q2 may be the reconstruction levels of Q1 having an even index.

So, the encoder E2 implements a method for encoding into a bitstream, at least the parameters representative of the coefficients of the NN based decoder DV wherein the decoder is trained using the training method described with reference to figure 5 or 6.

Then, a bitstream generator generates a bitstream comprising
- an encoded neural network decoder, of a neural network based encoder and decoder, encoded according to a method according to the present disclosure and
- a signal encoded using said neural network encoder.

The TD signal may be concatenated with the encoded signal W by the bit stream generator to create the bitstream. By concatenation, one can understand any form of assembling both signals into a single bitstream and for instance multiplexing. The bitstream provided may be understandable by the decoder in charge of decoding the encoded signal VV.

In practice, the bit stream generator may include an entropy encoder for entropy encoding of the aggregated data.

However, for the sake of simplification, we will not describe here the entropy coding step but the datastream F may have been entropy coded.

The bitstream F can then be transmitted to another electronic device through the TX interface such as for example, a decoding device as illustrated by figure 7B or stored in a storage unit (such as a hard disk or a memory of the encoding device E2 for subsequent reading and transmitting.

So, the encoder E1 implements a method for encoding into a bitstream, at least the parameters representative of the coefficients of the NN based decoder DV wherein the decoder is trained using the training method described with reference to figure 4 or 6.

Figure 3 illustrates an example of a hardware architecture of an encoder according to some implementations of the present disclosure and for instance the encoders E1 or E2 of figures 2A and 2B.

To this end, the encoder has the hardware architecture of a computer. As shown in Figure 3, the encoder comprises a processor 1. Although illustrated as a single processor 1, two or more processors can be used according to particular needs, desires, or particular implementations of the encoder. Generally, the processor 1 executes instructions and manipulates data to perform the operations of the encoder and any algorithms, methods, functions, processes, flows, and procedures as described in the present disclosure.

The encoder may also comprise communication means 5. Although illustrated as a single communication means 5 in Fig. 3, two or more communication means may be used according to particular needs, desires, or particular implementations of the decoder. The communication means can be used by the encoder for communicating with another electronic device that is communicatively linked with it, and for instance a decoding device. Generally, the communication means 5 may comprise logic encoded in software, hardware, or a combination of software and hardware. More specifically, the communication means 5 can comprise software supporting one or more communication protocols associated with communications to communicate physical signals within and outside of the illustrated decoder.

The encoder may also comprise a random access memory 2, a read-only memory 3, and a non-volatile memory 4. The read-only memory 3 of the encoder constitutes a recording medium conforming to the disclosure, which is readable by processor 1 and on which is recorded a computer program PROG_EN conforming to the present disclosure, containing instructions for carrying out the steps of the method for training a neural network based decoder according to the present disclosure.

The program PROG_EN defines functional modules of the encoder, which are based on or control the aforementioned elements 1 to 5 of the encoder, and which comprise in particular:
- a NN based encoder EV for encoding the input video signal V into an output signal VV,
- a NN based decoder DV for being trained on the input signal V and transmitted together with the encoded signal V,
- a network coder for encoding the trained NN based decoder,
- a bitstream generator for concatenating the encoded trained NN based decoder and the encoded signal VV.
- A transmission interface TX for transmitting the encoded signal F.

In some implementations, the defined modules may comprise also:
- a reference NN based encoder EU,
- a reference NN based decoder DU for providing differential parameters of the trained NN based decoder,

Figure 4 illustrates an example of a training method, or a computer implemented training method, of a NN based decoder according to some implementations of the present disclosure. Figure 3 may represent a subset of steps implemented during training of a NN based decoder DV according to implementations of the present disclosure.

Figure 4 describes a method for training a neural network based decoder (DV), comprising during said training, quantizing, using a training quantizer (Q2), parameters representative of the coefficients of the neural network.

According to the implementation of figure 4, the parameters are the coefficients of said neural network (EV-DV).

As mentioned earlier figure 4 may illustrate a method implemented by an encoder E1 of figure 2A.

The method receives as input a signal V to be encoded. As mentioned earlier, said signal can be of any type, for instance an audio or video signal or a combination of both or other types of signals that need to be compressed. Also as mentioned above, in order to reduce computation time, the signal V can be split into subset of data called hereafter minibatch. The signal V is split into N minibatches, and V(i), I between 1 and N, represents the minibatch i.

In the present implementation, in order to illustrate the present disclosure, the input signal V represents a video signal comprising a set of images. The minibatch i is therefore a subset of images of the input video signal V. As mentioned earlier, one purpose of the disclosure is to provide a specific NN codec for encoding and decoding the signal V. When signal V is encoded and stored or transmitted for being afterwards decoded, the method is reinitialized and the NN codec is trained again specifically for this new video signal.

At step S1, the NN based encoder EV and the NN based decoder DV are initialized. The initialization values, for minibatch 0 are EV(0) and DV(0). The initialization values are initialization values of the coefficients of the NN based encoder and decoder. The initialization may be performed using a predetermined method, or the coefficients can be assigned randomly.

Further to step S1 quantization of the NN based decoder DV(i) is performed, applying a quantizer Q2 on the coefficients of the NN based decoder DV(i), step S2.

Further to quantizer Q2, a dequantizer is applied to Q2(V(i)) to obtain dequantized signal DQ2(Q2(V(i))) called DV2(i) at step S3.

Signal DV2(i) = DQ2(Q2(V(i))) is then used to train the NN based decoder DV during step S4 together with the NN based encoder EV. A number of inferences are run till backpropagation is decided, step S5, to update the NN coefficients.

At step S6, gradients are derived from the obtained coefficients.

However, in order to preserve the gradients, they are not applied on the quantized coefficients of the NN based decoder but on un-quantized coefficients following an optimization process, step S7. Therefore gradients are applied on EV(i) and DV(i) coefficients, where a they are used to determine the updated coefficients. The coefficients are updated, which produces EV(i+1) and DV(i+1), respectively the encoder and decoder to be trained during the next minibatch i+1.

Therefore, as explained above, according to some implementations, the training method comprises:
- running inferences of the training of the NN based decoder (DV) using the quantized parameters,
- backpropagating gradients based on a result of said inferences to update coefficients of the NN based decoder (DV), updated coefficients of the trained NN based decoder (DV) being un-quantized.

At step S8, i is incremented and next minibatch is input to the NN based codec EV(i+1), DV(i+1).

Figure 5 illustrates an example of a training method, or a computer implemented training method, according to other implementations of the present disclosure.

Figure 4 describes a method for training a neural network based decoder (DV), comprising during said training, quantizing, using a training quantizer (Q2), parameters representative of the coefficients of the neural network.

According to the implementation of figure 5, the parameters are differences between the coefficients of said neural network (EV-DV) and the coefficients of a reference neural network (EU-DU).

As mentioned earlier figure 5 may illustrate a method implemented by a NN codec of figure 2B.

The method receives as input a signal V to be encoded. As mentioned earlier, said signal can be of any type, for instance an audio or video signal or a combination of both or other types of signals that need to be compressed. Also as mentioned above, in order to reduce computation time, the signal V can be split into subset of data called hereafter minibatch. The signal V is split into N minibatches, and V(i), i between 1 and N, represents the minibatch i.

In the present implementation, in order to illustrate the present disclosure, the input signal V represents a video signal comprising a set of images. The minibatch i is therefore a subset of images of the input video signal V. As mentioned earlier, one purpose of the disclosure is to provide a specific NN codec for encoding and decoding the signal V. When signal V is encoded and stored or transmitted for being afterwards decoded, the method is reinitialized and the NN codec is trained again specifically for this new video signal.

At step T1, the NN based encoder EV and the NN based decoder DV are initialized. The initialization values, for minibatch 0 are EV(0) and DV(0). The initialization values are initialization values of the coefficients of the NN based encoder and decoder. The initialization may be performed using a predetermined method, or the coefficients can be assigned randomly.

At step T2, the NN codec obtains a reference or universal NN based codec EU_DU. The EU_DU codec is trained in a typical fashion: the cost function may for instance be the rate-distortion, the training set may consist in several hundreds of videos that are representative of the type of content that one may later want to compress, and the usual steps of inference and gradient back propagation are applied. This produces EU and DU that we refer to as the universal NN based encoder and universal NN based decoder (universal meaning that they are able to process any kind of video).

At step T3, a difference DDV(i) is computed between the coefficients of the NN based reference decoder DU(i) and the NN based decoder DV(i) to be trained.

At step T4, a quantizer Q2 is applied on this difference and Q2(DDV(i)) is obtained as output.

At step T5, a dequantizer DQ2 is applied and DDV2(i) = DQ2(Q2(DDV(i))) is obtained.

At step T6, signal DV2(i) is obtained as DV2(i)= DU - DDV2(i)

Signal DV2(i) is then used to train the NN based decoder DV during step T7 together with the NN based encoder EV. A number of inferences are run till backpropagation is decided, step T8, to update the coefficients of the NN base decoder DV.

At step T9, gradients are derived from the obtained coefficients.

However, in order to preserve the gradients, they are not applied on the quantized coefficients of the NN based decoder but on un-quantized coefficients following an optimization process, step T10. Therefore gradients are applied on EV(i) and DV(i) coefficients, where they are used to determine the updated coefficients. The coefficients are updated, which produces EV(i+1) and DV(i+1), respectively the encoder and decoder to be trained during the next minibatch i+1.

Therefore, as explained above, according to some implementations, the training method comprises:
- running inferences of the training of the NN based decoder (DV) using the quantized parameters,
- backpropagating gradients based on a result of said inferences to update coefficients of the NN based decoder (DV), updated coefficients of the trained NN based decoder (DV) being un-quantized.

At step T11, i is incremented and next minibatch is input to the NN codec EV(i+1), DV(i+1).

So, according to the implementation of figure 5, the training method comprises:
- obtaining a difference (DDV) between a reference neural network based decoder (DU) and the NN based decoder (DV) to be trained,
- obtaining a dequantized version (DDV2) of said difference, said dequantized version (DDV2) being obtained further to applying said quantization,
- obtaining a trained NN based decoder (DV2) as a difference between the reference NN based decoder (DU) and said dequantized version (DDV2),
- said running inferences comprising the NN based encoder to be trained (EV) and said obtained trained NN based decoder (DV2).

Figure 6 represents a global overview of the training method, or a computer implemented training method, according to implementations of the present disclosure and in particular in accordance with examples given in figures 3 and 4.

Figure 6 describes a method for training a neural network based decoder (DV), comprising during said training, quantizing, using a training quantizer (Q2), parameters representative of the coefficients of the neural network.

As mentioned earlier, the method uses as input a signal V. As illustrated on this figure and already explained earlier, the signal V is split into a set of minibatches V(i).

At step E1, a set of initialization coefficients is obtained for the NN codec to start the training phase, called EV(0)_DV(0) respectively for the NN encoder and the NN based decoder. The initialization values are initialization values of the coefficients of the NN based encoder and decoder. The initialization may be performed using a predetermined method, or the coefficients can be assigned randomly.

At step E2, a quantization of parameters of the NN based decoder is performed.

According to a first implementation, the parameters can be the coefficients of the NN based decoder. More precisely, the parameters are the coefficients of the NN based decoder DV.

According to another implementation, the parameters can be a difference between the coefficients of the NN codec EV_DV and the coefficients of a reference NN codec EU_DU. More precisely, the coefficients may be a difference between the coefficients of the NN based decoder DV and the coefficients of a reference NN based decoder DU.

In this implementation, the method obtains also a reference (or universal) NN codec comprising a pair EU_DU of reference neural network based encoder and decoder. Said reference NN codec has been previously trained on a large number of input video and as such may be considered as universal. As able to process any kind of input video. The EU_DU codec is trained in a typical fashion: the cost function may for instance be the rate-distortion, the training set may consist in several hundreds of videos that are representative of the type of content that one may later want to compress, and the usual steps of inference and gradient back propagation are applied. This produces EU and DU that we refer to as the universal encoder and universal.

The quantization step E2 consists more precisely in a quantizer followed by a de-quantizer applied on the parameters, so that the NN based decoder DV is trained with parameters which have been quantized and therefore the noise generated by the quantizer is input during the training phase so that the signal at decoding side is decoded much more efficiently than without quantizer during training.

The parameters further to their quantization and de-quantization are then used during the running of inferences, step E3. Further to the set of inferences, the loss function is obtained and retropropagated, step E4, to derive the gradient of the loss with respect to the parameters of the network to be optimized.

A typical loss function used in video coding may be a rate-distortion cost such as D + λ R where D is the distortion measured between input signal V and corresponding decoded signal V', R is the rate estimated by the entropy of the indices I, and λ is a factor input by the user to choose the compromise between compression and quality.

At step E5, the gradients obtained at step E4, are used to derive the update of the coefficients of the network that will be used for the next minibatch. In order to update the coefficients, the gradients are applied onto EV(i) and DV(i) but not on the coefficients obtained further to step E2.

Therefore, as explained above, according to some implementations, the training method comprises:
- running inferences of the training of the NN based decoder (DV) using the quantized parameters,
- backpropagating gradients based on a result of said inferences to update coefficients of the NN based decoder (DV), updated coefficients of the trained NN based decoder (DV) being un-quantized.

At step E6, a new minibatch is taken as input of the training method and a new minibatch is used.

The training ends once a number N of minibatches are used.

Figure 7A and 7B represent two different implementations of a decoder for decoding a signal generated for instance by encoders 2A and 2B respectively.

With reference to figure 7A, the decoder D1 receives as input the bitstream F produced by the encoder E1 (as explained above).

The decoder D1 may comprise entropic decoding of the bitstream F to be able to decode the data. However, as already indicated, this aspect will not be described here in detail.

The bitstream F comprises several parts, and at least the encoded signal TD and the encoded signal VV. The encoded data VV may comprise a plurality of data units associated respectively with the different images of an image sequence. (In other words, each of these parts of the bitstream may correspond to a sequence of images).

The decoder D1 comprises a reception interface, Rx interface, to receive the signal and optionally, apply a first decoding stage, before transferring it to an analyzer. The reception interface may remove network protocol layers to the incoming signal. The analyzer may identify in the bitstream F the different data that compose it. The analyzer may furthermore be designed to identify the data units within the bitstream F and transmit each data unit to a NN based decoder DV.

A network decoder is designed to decode the parameters encoded by the network encoder of the encoder E1 included in the bitstream F, corresponding to TD signal.

In this implementation, the TD signal comprises the coefficients of the NN based decoder DV which have been trained according to the present disclosure by encoder E1, signal DV2 as mentioned earlier. Once decoded, the parameters are then applied to the NN based decoder DV for configuring the NN based decoder DV.

A network decoder is designed to decode the parameters encoded by the network encoder of the encoder E2 included in the bitstream F, corresponding to TD signal. This network decoder comprises several components and more precisely a de-quantizer DQ(1) which is able to dequantize the received parameters of the NN trained decoder TD and obtain DV2 trained NN based decoder DV.

The NN based decoder DV decodes the data units to obtain a two-dimensional representation IMG' of the current image and the video stream V' is constructed as a sequence of the images IMG'.

With reference to figure 7B, the decoder D2 receives as input the bitstream F produced by the encoder E2 (as explained above).

The decoder D2 may comprise entropic decoding of the bitstream F to be able to decode the data. However, as already indicated, this aspect will not be described here in detail.

The bitstream F comprises several parts, and at least the encoded signal TD and the encoded signal VV. The encoded data VV may comprise a plurality of data units associated respectively with the different images of an image sequence. (In other words, each of these parts of the bitstream may correspond to a sequence of images).

The decoder D2 comprises a reception interface, Rx interface, to receive the signal and optionally, apply a first decoding stage, before transferring it to an analyzer. The reception interface may remove network protocol layers to the incoming signal. The analyzer may identify in the bitstream F the different data that compose it. The analyzer may furthermore be designed to identify the data units within the bitstream F and transmit each data unit to a NN based decoder DV.

A network decoder is designed to decode the parameters encoded by the network encoder of the encoder E2 included in the bitstream F, corresponding to TD signal. This network decoder comprises several components and more precisely a de-quantizer DQ(1) which is able to dequantize the received parameters of the trained NN based decoder TD and obtain DDV2 trained NN based decoder DV.

In this implementation, the TD signal comprises parameters of the NN based decoder DV which have been trained according to the present disclosure by encoder E1, signal DDV2 as mentioned earlier. These parameters are a difference between the coefficients of the NN codec EV_DV and the coefficients of the reference NN codec EU_DU. In order to retrieve the coefficients DV2 of the NN based decoder DV, the parameters DDV2 are substracted from the coefficients of the NN based decoder DU. Obtained DV2 parameters are then used for configuring the NN based decoder DV The NN based decoder DV decodes the data units to obtain a two-dimensional representation IMG' of the current image and the video stream V' is constructed as a sequence of the images IMG'.

Figure 8 illustrates a hardware architecture of a decoder according to some implementations of the present disclosure and for instance the decoders D1 or D2 of figures 7A and 7B.

To this end, the decoder has the hardware architecture of a computer. As shown in Figure 3, the decoder comprises a processor 1. Although illustrated as a single processor 1, two or more processors can be used according to particular needs, desires, or particular implementations of the decoder. Generally, the processor 1 executes instructions and manipulates data to perform the operations of the decoder and any algorithms, methods, functions, processes, flows, and procedures as described in the present disclosure.

The decoder may also comprise communication means 5. Although illustrated as a single communication means 5 in Fig. 3, two or more communication means may be used according to particular needs, desires, or particular implementations of the decoder. The communication means can be used by the decoder for communicating with another electronic device that is communicatively linked with it, and for instance an encoding device. Generally, the communication means 5 may comprise logic encoded in software, hardware, or a combination of software and hardware. More specifically, the communication means 5 can comprise software supporting one or more communication protocols associated with communications to communicate physical signals within and inside of the illustrated decoder.

The decoder may also comprise a random access memory 2, a read-only memory 3, and a non-volatile memory 4. The read-only memory 3 of the decoder constitutes a recording medium conforming to the disclosure, which is readable by processor 1 and on which is recorded a computer program PROG_DN conforming to the present disclosure, containing instructions for decoding a signal encoded by an encoder carrying out the steps of the method for training a neural network based decoder according to the present disclosure.

The program PROG_DN defines functional modules of the decoder, which are based on or control the aforementioned elements 1 to 5 of the decoder, and which comprise in particular:
- A reception interface Rx,
- An analyzer for analyzing the input signal and identifying the different components of said signal,
- a NN based decoder DV for decoding the input video signal VV into an output signal V',
- a network decoder for decoding the trained NN based decoder and providing decoded coefficients (DV2) to the trained NN based decoder DV,

In some implementations, the defined modules may comprise also a reference NN based decoder DU, for obtaining the coefficients of the NN based decoder DV from the differential encoded parameters of the trained NN based decoder DV (DDV2) when coded differentially with regards to decoder DU as mentioned earlier

The present disclosure concerns also a bitstream comprising encoded parameters representative of a neural network based decoder trained according to the training method of the present disclosure.

The present disclosure concerns also a bitstream comprising encoded parameters representative of a NN based decoder trained according to the training method of the present disclosure and an encoded video signal encoded with a NN based encoder, said NN encoder and NN decoder having been trained using said video signal.

The present disclosure concerns also an apparatus for training a NN based decoder (DV) comprising means for quantizing, using a training quantizer (Q2), parameters representative of the coefficients of said neural network based decoder (DV).

According to some implementations, the means for quantizing may comprise the quantizer Q2 and dequantizer DQ2 and additional logic circuits to provide said quantizing function on said NN based decoder.

## Claims

1. A method for training a neural network based decoder (DV), comprising during said training, quantizing, using a training quantizer (Q2), parameters representative of the coefficients of said neural network based decoder (DV).

2. A method according to claim 1 wherein said parameters are the coefficients of said neural network based decoder (DV).

3. A method according to claim 1 wherein said parameters are differences between the coefficients of said neural network based decoder (DV) and the coefficients of a reference neural network based decoder DU).

4. A method according to any of the previous claims comprising
- running inferences of the training of the neural network based decoder (DV) using said quantized parameters,
- backpropagating gradients based on a result of said inferences to update coefficients of said neural network based decoder (DV), updated coefficients of the neural network trained neural network based decoder (DDV2, DV2) being un-quantized.

5. A method according to any of claims 1 to 4 wherein it comprises :
- obtaining a difference (DDV) between a reference neural network based decoder (DU) and said neural network based decoder (DV) to be trained,
- obtaining a dequantized version (DDV2) of said difference, said dequantized version (DDV2) being obtained further to applying said quantization,
- obtaining a trained neural network based decoder (DV2) as a difference between said reference neural network decoder (DU) and said dequantized version (DDV2),
- said running inferences comprising the neural network based encoder to be trained (EV) and said obtained trained decoder (DV2).

6. A method for encoding, into a bitstream (TD), at least parameters representative of the coefficients of a neural network based decoder (DV) wherein said neural network based decoder (DV) is trained using the training method of any of the previous claims.

7. An encoding method according to claim 6 comprising quantization of said parameters representative of the coefficients of said trained neural network based decoder (DDV2, DV2) using a quantizer (Q1) said quantizer (Q1) being
- equal to said training quantier (Q2) or
- a quantizer which reconstruction levels comprise the reconstruction levels of the training quantizer Q2

8. An encoding method according to claim 6 comprising quantization of said parameters representative of the coefficients of said trained neural network based decoder (DDV2, DV2) using a quantizer (Q1), said training quantizer (Q2) being function of distortion and said quantizer (Q1) being function of rate-distortion.

9. An encoding method according to claim 6 comprising quantization of said parameters representative of the coefficients of said trained neural network based decoder (DDV2, DV2) using a quantizer (Q1), said training quantizer (Q2) minimizing the distortion and said quantizer (Q1) minimizing the rate-distortion.

10. An encoding method according to any of claims 6 to 9 wherein said encoding is compliant with
- Neural Network Representation (NNR) or
- Neural Network Exchange Format (NNEF) or
- Open Neural Network Exchange (ONNX).

11. A method for generating an encoded bitstream comprising
- an encoded neural network decoder, of a neural network based encoder and decoder, encoded according to a method according to any of claims 6 to 10 and
- a signal encoded using said neural network based encoder.

12. A method according to claim 11 wherein said bitstream is generated by concatenating said encoded neural network based decoder (DV) and said encoded signal.

13. An apparatus for training a neural network based decoder (DV), comprising one or several processors configured alone or in combination to, during said training, quantize, using a training quantizer (Q2), parameters representative of the coefficients of said neural network based decoder (DV).

14. An apparatus according to claim 13 wherein said parameters are the coefficients of said neural network based decoder (DV).

15. An apparatus according to claim 13 wherein said parameters are differences between the coefficients of said neural network based decoder (DV) and the coefficients of a reference neural network based decoder (DU).

16. An apparatus according to any of claims 13 to 15 further configured for
- running inferences of the training of the neural network based decoder (DV) using said quantized parameters,
- backpropagating gradients based on a result of said inferences to update coefficients of said neural network based decoder (DV), updated coefficients of the trained neural network based decoder (DV) being un-quantized.

17. An apparatus according to any of claims 13 to 16 further configured for:
- obtaining a difference (DDV) between a reference neural network based decoder (DU) and said neural network based decoder (DV) to be trained,
- obtaining a dequantized version (DDV2) of said difference, said dequantized version (DDV2) being obtained further to applying said quantization,
- obtaining a trained decoder (DV2) as a difference between said reference neural network based decoder (DU) and said dequantized version (DDV2),
- said running inferences comprising the neural network based encoder to be trained (EV) and said obtained trained neural network based decoder (DV2).

18. An apparatus for encoding into a bitstream (NN) at least parameters representative of the coefficients of a neural network based decoder (DV) wherein said neural network based decoder (DV) is trained using the training apparatus of claim 13.

19. An apparatus for generating an encoded bitstream comprising
- an encoded neural network based decoder (DV), of a neural network based encoder (EV) and decoder (DV), encoded with an apparatus according to claim 18 and
- a signal encoded using said neural network based encoder (EV).

20. A computer program product comprising instructions which, when the program is executed by one or more processors, causes the one or more processors to perform the method of any of claims 1 to 5 or the method according to claim 6 to 10 or the method according to claim 11 to 12.

21. A computer readable storage medium having stored thereon instructions for causing one or more processors to perform the method of any of claims 1 to 5 or the method according to claim 6 to 10 or the method according to claim 11 to 12.
